# EUROPEAN PATENT APPLICATION

(11) **EP 1 193 886 A1**
(43) Date of publication of application: **03.04.2002**
(21) Application number: 01914184.5
(22) Date of filing: 21.03.2001
(51) Int. Cl.: H04B 1/04, H04B 10/12, H04B 7/06, H04B 7/26

(54) **TRANSMISSION DEVICE**

(30) Priority: 21.03.2000 JP 2000078409
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0102219
(87) International publication number: WO0171932

(57) **Abstract**

Transmit power calculating section 108 calculates transmit power in each of variable amplifiers 103-1 to 103-N based on a transmit power control signal for instructing to increase or decrease the transmit power, and multiplexing allocating section 104 allocates the transmit signal to each of transmission amplifiers 106-1 to 106-M so that the transmit power calculated in transmit power calculating section 108 does not exceed a threshold for which each of transmission amplifiers 106-1 to 106-M is set.

## Description

### Technical Field

The present invention relates to a transmission apparatus that performs transmit power control, and more particularly to a transmission apparatus that provides transmit signals using an optical fiber transmission path.

### Background Art

The transmit power control is a technique for varying the transmit power adaptively in a transmit-side apparatus in order for a receive-side apparatus to obtain an optimal received level. The transmit power control includes closed-loop transmit power control where the receive-side apparatus judges whether to increase or decrease the transmit power, and based on the judgment, the transmit-side apparatus varies the transmit power, and open-loop transmit power control where the transmit-side apparatus judges whether to increase or decrease the transmit power, and based on the judgment varies the transmit power. With respect to these types of transmit power control, an example will be described below where the transmit power control on downlink is performed in radio communications between a base station and a mobile station.

### <Closed-loop transmit power control>

The closed-loop transmit power control will be described first.

A mobile station receives a signal transmitted from a base station, and measures a received SIR (Signal to Interference Ratio) of the received signal for each slot. The mobile station compares the measured received SIR (hereinafter referred to as "measured SIR") with a predetermined received SIR (hereinafter referred to as "target SIR") as a target, and when the measured SIR is less than the target SIR, transmits a transmit power control signal for instructing the base station to increase the transmit power. On the other hand, when the measured SIR is greater than the target SIR, the mobile station transmits a transmit power control signal for instructing the base station to decrease the transmit power.

The base station having received the transmit power control signal from the mobile station increases or decreases the transmit power according to the contents of the instruction. Thus, increasing or decreasing the transmit power for each slot maintains an optimal state of the received level in the mobile station.

### <Open-loop transmit power control>

The open-loop transmit power control will be described next.

A base station receives a signal transmitted from a mobile station, and measures received power of the received signal for each slot. The base station compares the measured power with the target power, and when the measured power is less than the target power, controls a transmission amplifier provided in the base station to increase the transmit power. On the other hand, when the measured power is greater than the target power, the base station controls the transmission amplifier to decrease the transmit power.

The base station increasing or decreasing the transmit power for each slot maintains an optimal state of the received level in the mobile station.

Performing thus the transmit power control enables a receive-side apparatus to receive a signal with an optimal received level, and therefore, the transmit power control is an important technique in radio communications. In particularly, in CDMA (Code Division Multiple Access) radio communications, since the channel capacity is made maximum when the received level is the same on each user, the transmit power control becomes important.

In addition, since a conventional transmit-side apparatus multiplexes transmit signals of a lot of users with one transmission amplifier, the apparatus needs a transmission amplifier with a large transmit gain and with a wide transmit dynamic range as the number of users increases.

However, there has been a problem with a conventional transmission amplifier as follows; a distortion arises in an amplifier output and a desired amplification rate is not obtained when a level of an input signal exceeds some level. This problem can be solved by using a transmission amplifier with a wide transmit dynamic range, but such solving causes a problem that the production cost increases.

### Disclosure of Invention

It is an object of the present invention to provide a transmission apparatus capable of obtaining a desired amplification rate even in amplifying transmit signals of a lot of users, and of being produced with inexpensive cost.

The object is achieved by providing the transmission apparatus with at least two transmission amplifiers, and by allocating transmit signals based on the transmit power control signal so that loads on the transmission amplifiers are equal to each other.

### Brief Description of Drawings

FIG.1 is a block diagram illustrating a configuration of a transmission apparatus according to a first embodiment of the present invention;
FIG.2 is a table showing an example of allocation of transmit signals to transmission amplifiers at the time of starting communications;
FIG.3 is a table showing an example of allocation of transmit signals to the transmission amplifiers after processing on one slot is performed after the communications are started;
FIG.4 is a table showing an example of allocation of transmit signals to the transmission amplifiers after processing on 50 slots is performed after the communications are started;
FIG.5 is a table showing an example of change in the allocation of transmit signals to the transmission amplifiers; and
FIG.6 is a block diagram illustrating a configuration of a transmission apparatus according to a second embodiment of the present invention.

### Best Mode for Carrying Out the Invention

Preferred embodiments of the present invention will be described below specifically with reference to accompanying drawings.

### (First embodiment)

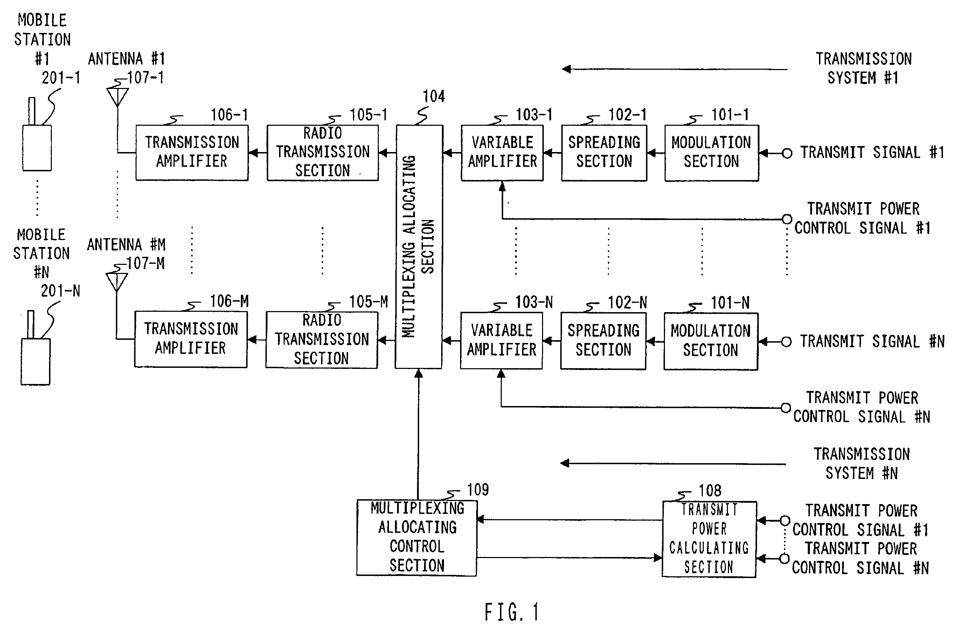

A transmission apparatus according to the first embodiment will be described below with reference to FIG. 1. FIG.1 is a block diagram illustrating a configuration of the transmission apparatus according to the first embodiment of the present invention. In addition, a number of transmission systems equal to the number of transmit signals (the number of mobile stations to communicate) are provided before the multiplexing, and a number of transmission systems equal to the number of antennas of the transmission apparatus are provided after the multiplexing. To simplify the description, FIG.1 indicates only two systems, i.e., transmission systems #1 and #N before the multiplexing, and two systems, i.e., transmission systems #1 and #M after the multiplexing. Further, since each transmission system performs the same processing, the description will be performed primarily on transmission system #1 with descriptions on other systems omitted.

As illustrated in FIG.1, the transmission apparatus according to this embodiment is comprised of modulation sections 101-1 to 101-N, spreading sections 102-1 to 102-N, variable amplifiers 103-1 to 103-N, multiplexing allocating section 104, radio transmission sections 105-1 to 105-M, transmission amplifiers 106-1 to 106-M, antennas 107-1 to 107-M, transmit power calculating section 108 and multiplexing allocating control section 109. The transmission apparatus performs communications with a plurality of mobile stations 201-1 (mobile station #1) to 201-N (mobile station #N). Generally M is less than N (M<N). Further, mobile station 201-1 transmits transmit signal #1 and transmit power control signal #1 to the transmission apparatus. Similarly, each of the other mobile stations transmits a transmit signal and transmit power control signal of the corresponding number to the transmission apparatus.

The processing on the signal to be multiplexed will be described first.

Modulation section 101-1 performs primary modulation such as QPSK on transmit signal #1 to output to spreading section 102-1. Spreading section 102-1 performs spreading on the output signal of modulation section 101-1 to output to variable amplifier 103-1. Based on transmit power control signal #1 from mobile station #1, variable amplifier 103-1 amplifies the output signal of spreading signal 102-1 to output to multiplexing allocating section 104. Multiplexing allocating section 104 multiplexes output signals of variable amplifiers 103-1 to 103-N, and allocates the multiplexed signal to radio transmission sections 105-1 to 105-M according to the control of multiplexing allocating control section 109.

The processing on allocated signals will be described below.

Radio transmission section 105-1 performs the predetermined radio transmission processing such as D/A conversion on the output signal of multiplexing allocating section 104 to output to transmission amplifier 106-1. Transmission amplifier 106-1 amplifies the output signal of radio transmission section 105-1 at a predetermined amplifying ratio, and the radio signal is transmitted through antenna 107-1.

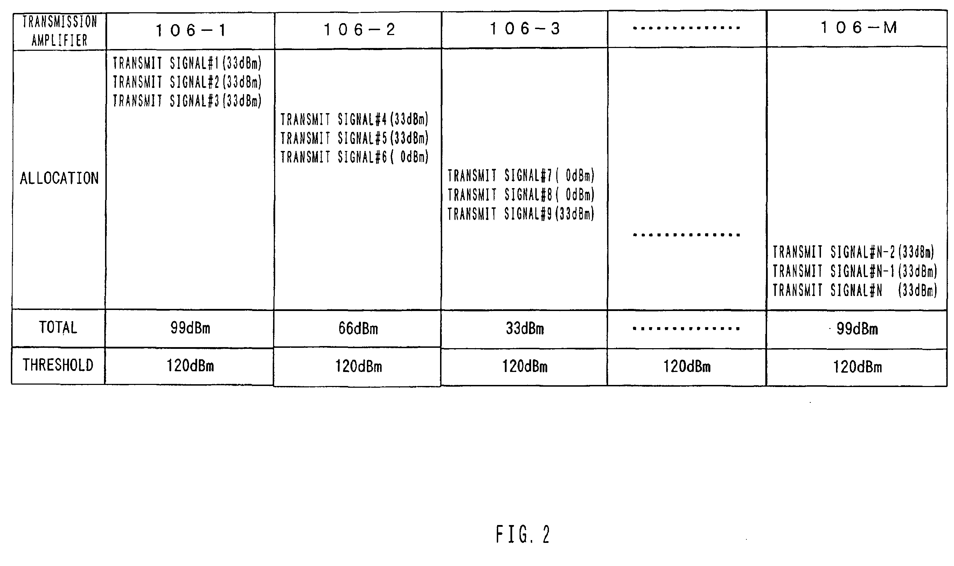

The allocation of the multiplexed signal will be described below with reference to FIGs.2 to 5.

Transmit power calculating section 108 calculates the transmit power in each of variable amplifiers 103-1 to 103-M according to instructions for increasing or decreasing the transmit power indicated by the transmit power control signals transmitted from mobile stations 103-1 to 103-M, and generates transmit signal allocation tables illustrated in FIGs.2 to 5. Each of the transmit signal allocation table is indicative of the allocation of transmit signals to the transmission amplifiers and the transmit power (on a dBm basis ) in variable amplifiers 103-1 to 103-N.

Multiplexing allocating control section 109 refers to the transmit signal allocation table generated in transmit power calculating section 108, and compares the total value of transmit power allocated to each of transmission amplifiers 106-1 to 106-M with a threshold for which each of transmission amplifiers 106-1 to 1-6-M is set. Then, when the total value of transmit power exceeds the threshold, the section 109 allocates a signal with the greatest transmit power among the transmit signals allocated to the transmission amplifier having the total value exceeding the threshold to a transmission amplifier having the least total value of transmit power.

The method for allocating transmit signals in multiplexing allocating control section 109 will be further described with reference to the transmit signal allocation tables shown in FIGS.2 to 5. It is herein assumed that a threshold is 120 dBm for which each of transmission amplifiers 106-1 to 106-M is set. The threshold (respective thresholds for which transmission amplifiers 106-1 to 106-M are set) is determined in consideration of a range of transmit gain in which each of transmission amplifiers 106-1 to 106-M is capable of amplifying a signal, and a dynamic range for which each of transmission amplifiers 106-1 to 106-M is capable of being set.

The transmit signal allocation table is updated based on the transmit power control signals transmitted from the mobile stations per a unit of control. It is assumed in this embodiment that the unit of control is one slot.

The transmit signals are allocated, for example, as shown in FIG.2 when communications are started. FIG. 2 is a table (transmit signal allocation table) showing an example of the allocation of transmit signals to transmission amplifiers 106-1 to 106-M when the communications are started. The transmit power of a signal to be transmitted to a mobile station that does not perform a communication is 0 dBm.

Each of mobile stations 201-1 to 201-N receives a signal transmitted from the base station after starting the communication and measures the received SIR for each slot. Each mobile station compares the measured received SIR (hereinafter referred to as "measured SIR") with target received SIR (hereinafter referred to as "target SIR"), and when the measured SIR is less than the target SIR, transmits the transmit power control signal for instructing the base station to increase the transmit power. On the other hand, when the measured SIR is greater than the target SIR, the mobile station transmits the transmit power control signal for instructing the base station to decrease the transmit power.

The transmit power control signal transmitted from each of mobile stations 201-1 to 201-N is received in a reception section (not shown) of the base station, and provided to a respective one of variable amplifiers 103-1 to 103-N and transmit power calculating section 108. Transmit power calculating section 108 refers to the contents of the instructions of the transmit power control signals to update the transmit signal allocation table for each slot. For example, when mobile station 201-1 transmits the transmit power control signal for decreasing the transmit power by 1 dBm, transmit power calculating section 108 updates the transmit power of transmit signal #1 to 32 dBm in the transmit signal allocation table. In addition, based on the respective transmit power control signals, variable amplifiers 103-1 to 103-N each increase or decrease the transmit power at the time of transmitting a next slot.

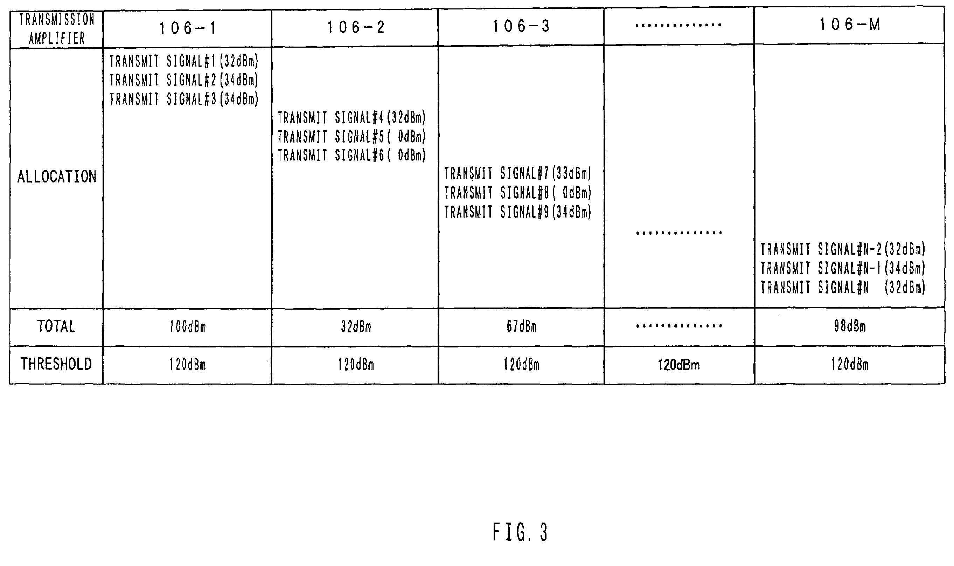

Transmit power calculating section 108 refers to the contents of the instruction of the transmit power control signal from each of mobile stations #1 to #N to updates the transmit signal allocation table for each slot. FIG.3 is a table (transmit signal allocation table) showing an example of the allocation of transmit signals to the transmission amplifiers after the processing on one slot is performed after the communications are started. Referring now to FIG.3, an example will be described for updating the transmit signal allocation table in transmitting one slot after the communications are started.

Transmit power calculating section 108 receives the transmit power control signals each for decreasing the transmit power by 1 dBm from mobile stations #1, #4, #N-2 and #N and calculates the transmit power of 32 dBm. Further, transmit power calculating section 108 receives the transmit power control signals each for increasing the transmit power by 1 dBm from mobile stations #2, #3, #9 and #N-1 and calculates the transmit power of 34 dBm. Since mobile station #5 does not perform transmission at this control timing, the transmit power thereof is calculated to 0 dBm. Since mobile station #7 starts transmission from this control timing, the transmit power thereof is calculated to 33 dBm. Since mobile station #8 does not perform transmission also at this control timing, the transmit power thereof is calculated to 0 dBm. Transmit power control section 108 thus calculates the transmit power of all the transmit signals, and then updates the transmit signal allocation table as shown in FIG.3.

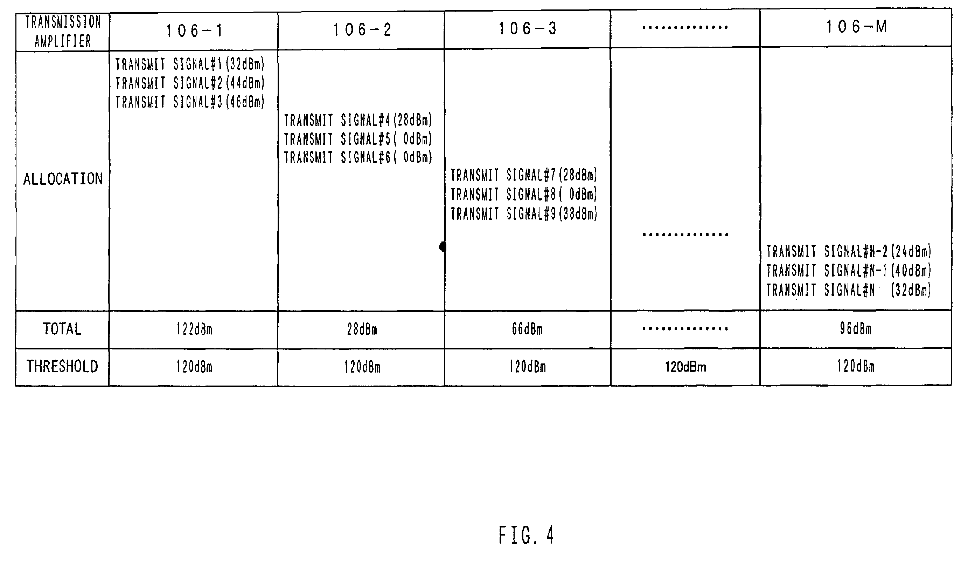

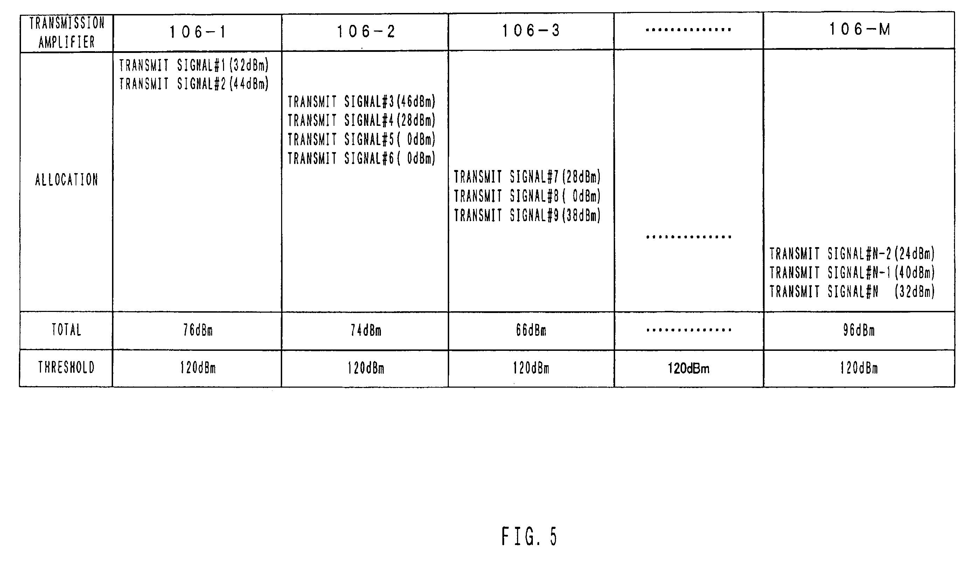

It is assumed that transmit power control calculating section 108 repeats the similar processing on 50 slots and that the transmit signal allocation table becomes, for example, as shown in FIG.4. FIG.4 is a table (transmit signal allocation table) showing an example of allocation of transmit signals to the transmission amplifiers after the transmission apparatus starts communications and then performs the processing on 50 slots. Since in the transmit signal allocation table illustrated in FIG.4, the total transmit power (122 dBm) of transmission amplifier 106-1 exceeds the threshold (120 dBm), for example, multiplexing allocating control section 109 allocates transmit signal #3 (46 dBm) with the highest transmit power among transmit signals of transmission amplifier 106-1 to another transmission amplifier. In this case, the section 109 selects as an amplifier to which the signal is allocated, for example, transmission amplifier 106-2 (not shown) with the least total transmit power, and, transmits an allocation instructing signal for instructing multiplexing allocating section 104 to allocate transmit signal #3 to transmission amplifier 106-2. In this way, transmit signal #3 undergoes the predetermined radio transmission processing in radio transmission section 105-2 (not shown) and is amplified in transmission amplifier 106-2. Multiplexing control section 109 transmits to transmit power calculating section 108 an update instructing signal for changing the allocation of transmit signal #3 from transmission amplifier 106-1 to transmission amplifier 106-2. Transmit power calculating section 108 updates the transmit signal allocation table to that as shown in FIG.5 based on the update instructing signal from multiplexing allocating control section 109. FIG.5 is a table (transmit signal allocation table) showing an example of change in the allocation of transmit signals to the transmission amplifiers in the transmission apparatus. In this way, since the total value of the transmit power does not exceed the threshold in each transmission amplifier, levels of signals to be input to respective amplifiers are made equal.

Based on the allocation instructing signal from multiplexing allocating control section 109 (in other words, according to the allocation indicated in the transmit signal allocation table shown in FIG.5), multiplexing allocating section 104 multiplexes transmit signals, and outputs the multiplexed signal to the radio transmission section corresponding to the transmission amplifier allocated the signal. For example, transmit signal #3 is multiplexed with transmit signal #4, transmit signal #5 and transmit signal #6, and the resultant signal is output to radio transmission section 105-2 (not shown) corresponding to transmission amplifier 106-2. In this case, radio transmission section 105 performs the predetermined radio transmission processing on the multiplexed transmit signal from multiplexing allocating section 104 to output to transmission amplifier 106-2. Transmission amplifier 106-2 amplifies the transmit signal from radio transmission section 105-2 at a predetermined amplification rate, and the amplified radio signal is transmitted from a corresponding antenna 107-2 (not shown).

Thus, based on the transmit power control signals from mobile stations, multiplexing allocating section 104 allocates transmit signals so that the signal level does not exceed a threshold predetermined in consideration of an amplification gain and dynamic range of each of transmission amplifiers 106-1 to 106-M, whereby levels of signals to be input to respective transmission amplifiers 106-1 to 106-M are made equal.

In addition, while FIG.2 shows the allocation of transmit signals at the time of starting communications, the present invention is not limited to such an allocation. It may be possible to allocate transmit signals almost equally to transmission amplifiers 106-1 to 106-M. Further, while the threshold of transmit power is set at 120 dBm, this value may be varied as appropriate to suit a configuration of a transmission amplifier. Furthermore, in this embodiment is described that the transmit power varies as shown in FIGs.2 to 5 corresponding to the transmit power control signals, the variation changes corresponding to propagation path environments.

The operation of the transmission apparatus with the above configuration will be described below in the case of processing transmit signal #3 as an example.

As shown in FIG.2, transmit signal #3 is allocated to transmission amplifier 106-1 before the communications are started. Transmit signal #3 undergoes primary modulation in modulation section 101-3 (not shown), and is spread with a spreading code in spreading section 102-3 (not shown). Since at this control timing, transmit power control signal #3 is not transmitted from mobile station #3, variable amplifier 103-3 amplifies the output signal of spreading section 102-3 to a predetermined value of 33 dBm to output to multiplexing allocating section 104. Multiplexing allocating section 104 multiplexes transmit signal #3 with transmit signal #1 and transmit signal #2 each allocated to transmission amplifier 106-1 to output to radio transmission section 105-1. Radio transmission section 105-1 performs the predetermined radio transmission processing on the signal output form multiplexing allocating section 104, transmission amplifier amplifies the processed signal at a predetermined amplification rate, for example, at 1.5 times to 51.76 dBm, and the amplified signal is transmitted from antenna 107-1 to the mobile station.

Transmit signal #3 with 51.76 dBm transmitted from the base station is assumed to be measured in SIR, for example, at 8 dB in mobile station #3 due to a propagation loss. Target received SIR of mobile station #3 is assumed to be 10 dB. In this case, since the measured received SIR is lower than the target received SIR, mobile station #3 (not shown) transmits to the base station the transmit power control signal for instructing to increase the transmit power by 1dBm.

In the base station, the transmit power control signal for instructing to increase the transmit power by 1dBm from mobile station #3 undergoes the predetermined radio reception processing, and is provided to variable amplifier 103-3 and transmit power calculating section 108. Based on the transmit power control signal, variable amplifier 103-3 increases the transmit power used in the previous transmission by 1 dBm to 34 dBm. Further based on the transmit power control signal, transmit power calculating section 108 updates the transmit signal allocation table to that as shown in FIG. 3. In this case, since the total transmit power (106 dBm) of transmission amplifier 106-1 does not exceed the threshold (120 dBm), the allocation of transmit signal #3 is not changed. Accordingly, transmit signal #3 is amplified in transmission amplifier 106-1 also at time of transmitting a next slot, and the resultant radio signal is transmitted.

Until the transmission is performed on 50 slots, since the total transmit power of transmission amplifier 106-1 does not exceed the threshold, the same processing is performed. Then, when the transmission of 50 slots is finished, the transmit signal allocation table is assumed to be, for example, as shown in FIG.4.

In FIG.4, since the total transmit power (122 dBm) of transmission amplifier 106-1 exceeds the threshold (120 dBm), multiplexing allocating control section 109 allocates transmit signal #3 (46 dBm) with the greatest transmit power among transmit signals to be amplified in transmission amplifier 106-ltotransmissionamplifier 106-2 with the least total transmit power. In this way, transmit power calculating section 108, the allocation of transmit signal #3 in the transmit signal allocation table is changed from transmission amplifier 106-1 to transmission amplifier 106-2. Further, in multiplexing allocating section 104, transmit signal #3 is multiplexed with transmit signal #4, transmit signal #5 and transmit signal #6 to be output to radio transmission section 105-2. The multiplexed signal undergoes the predetermined transmission processing in the section 105-2 and is amplified in transmission amplifier 106-2, and the amplified radio signal is transmitted.

Thus, the base station according to this embodiment is provided with a plurality of transmission amplifiers 106-1 to 106-M and allocates transmit signals so that levels of signals to be input to respective transmission amplifiers 106-1 to 106-M are made equal, whereby it is possible to decrease distortions arising in outputs of transmission amplifiers 106-1 to 106-M, and to obtain predetermined amplification rates. Further, since levels of signals to be input to respective transmission amplifiers 106-1 to 106-M are made equal, the need is eliminated for using a transmission amplifier with a wide transmit dynamic range, and as a result, it is possible to suppress an increase in cost to a minimum.

Moreover, since antennas 107-1 to 107-M are provided respectively corresponding to a plurality of transmission amplifiers 106-1 to 106-M, no loss occurs due to the combining, as compared with a case of combining signals of a plurality of transmission amplifiers, and therefore it is possible to communicate with a lot of users with efficiency.

In addition, in this embodiment is described the case where transmit power control signals are generated in a mobile station (the case of the closed-loop transmit power control). However, the present invention is not limited to such a case, and is applicable to the case where transmit power control signals are generated in a transmission apparatus (the case of the open-loop transmit power control).

### (Second embodiment)

The second embodiment is a modified example of the first embodiment, and differs from the first embodiment in converting a multiplexed transmit signal into an optical signal to transmit through an optical fiber cable.

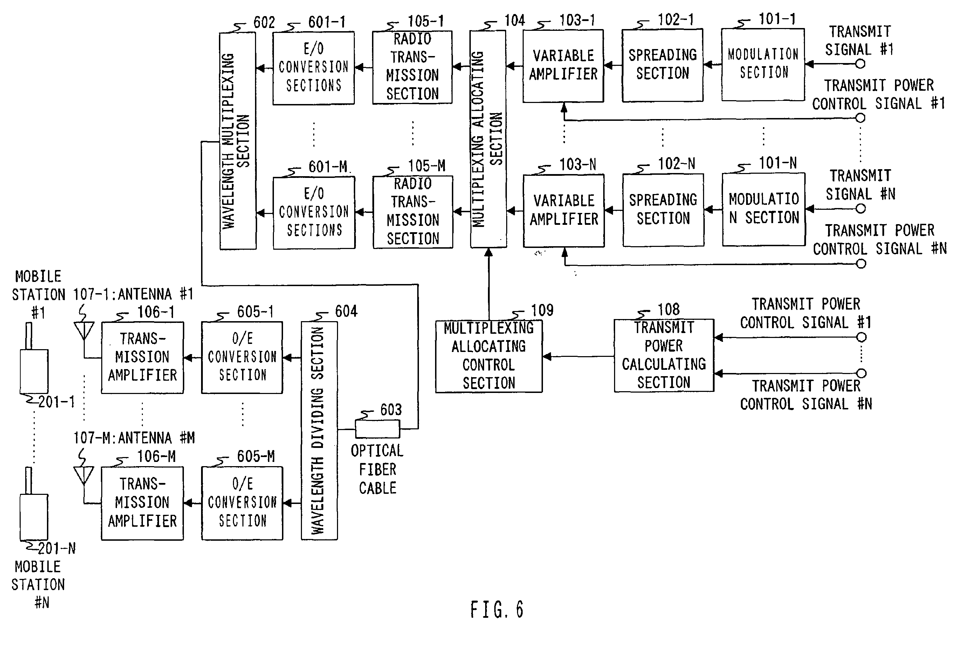

FIG.6 is a block diagram illustrating a configuration of a transmission apparatus according to this embodiment. In FIG.6, the same sections as in FIG.1 are assigned the same reference numerals as in FIG.1 to omit specific descriptions thereof.

As illustrated in FIG.6, the transmission apparatus according to this embodiment is comprised of, in addition to the sections of the transmission apparatus according to the first embodiment, E/O (Electric/Optical) conversion sections 601-1 to 601-M, wavelength multiplexing section 602, optical fiber cable 603, wavelength dividing section 604, O/E (Optical/Electric) conversion sections 604-1 to 604-M.

E/O conversion section 601-1 converts a transmit signal from radio transmission section 105-1 into an optical signal to output to wavelength multiplexing section 602. Wavelength multiplexing section 602 multiplexes transmit signals respectively from E/O conversion sections 601-1 to 601-M, and outputs the multiplexed signal to wavelength dividing section 604 through optical fiber cable 603. Wavelength dividing section 604 divides the multiplexed signal into respective transmit signals for transmission systems. In other words, the section 604 outputs the transmit signal provided through radio transmission section 105-1 and E/O conversion section 601-1 to O/E conversion section 605-1, while outputting the transmit signal provided through radio transmission section 105-M and E/O conversion section 601-M to O/E conversion section 605-M.

The operation of the transmission apparatus with the above configuration will be described below. Each of transmit signals #1 to #N is allocated in multiplexing allocating section 104 to either of transmission amplifiers 106-1 to 106-M, and corresponding to the allocation, is output to either of radio transmission sections 105-1 to 105-M. The allocation of transmit signals to the transmission amplifiers is performed under control of multiplexing allocating control section 109 controls in the same way as in the first embodiment. A transmit signal allocated to radio transmission section 105-1 ( for example, transmit signal #1 in FIG.2) undergoes the predetermined radio transmission processing, and is output to E/O conversion section 601-1 to be converted into an optical signal. The optical transmit signal is multiplexed in wavelength multiplexing section 602, and is output to wavelength dividing section 604 through optical fiber cable 603. Then, the signal is divided from the multiplexed signal in wavelength dividing section 604, and is output to O/E conversion section 605-1 to be converted into an electric signal. The electric transmit signal is amplified in transmission amplifier 106-1, and is transmitted to a mobile station through antenna 107-1.

Thus, the transmission apparatus according to this embodiment is provided with a plurality of transmission amplifiers 106-1 to 106-M and allocates transmit signals so that levels of signals to be input to respective transmission amplifiers 106-1 to 106-M are made equal, whereby a distortion does not arise in outputs of the transmission amplifiers, and it is thereby possible to obtain predetermined amplification rates. Further, since levels of signals to be input to respective transmission amplifiers are made equal, the need is eliminated for using transmission amplifying means with a wide transmit dynamic range, and as a result, it is possible to suppress an increase in cost to a minimum. Furthermore, since transmit signals are transmitted using an optical fiber cable, it is possible to suppress a propagation loss and to save locations to place transmission fibers.

As described above, according to the present invention, since it is possible to decrease distortions arising in outputs of transmission amplifiers 106-1 to 106-M by allocating transmit signals so that levels of signals to be input to the transmission amplifiers are made equal, it is possible to obtain predetermined amplification rates, and to suppress an increase in cost to a minimum.

This application is based on the Japanese Patent Application No.2000-078409 filed on March 21, 2000, entire content of which is expressly incorporated by reference herein.

### Industrial Applicability

The present invention is preferable to be used in a transmission apparatus that performs transmit power control, and more particularly to be used in a transmission apparatus that provides transmit signals using an optical fiber transmission path.

## Claims

1. A transmission apparatus comprising:
at least two transmission amplifying means each for amplifying a transmit signal;
transmit power calculating means for calculating transmit power in variable amplifying means for amplifying the transmit signal, based on a transmit power control signal for instructing to increase or a decrease the transmit power; and
multiplexing allocating control means for allocating the transmit signal to each of said transmission amplifying means, based on the transmit power calculated in said transmit power calculating means.

2. A transmission apparatus comprising:
at least two transmission amplifying means each for amplifying a transmit signal;
transmit power calculating means for calculating transmit power in variable amplifying means for amplifying the transmit signal, based on a transmit power control signal for instructing to increase or decrease the transmit power; and
multiplexing allocating control means for allocating the transmit signal to each of said transmission amplifying means so that total values of the transmit power of said transmission amplifying means to be almost equal to each other, based on the transmit power calculated in said transmit power calculating means.

3. The transmission apparatus according to claim 1 or claim 2, wherein said multiplexing allocating control means compares the total value of the transmit power of each of said transmission amplifying means calculated in said transmit power calculating means with a threshold for which each of said transmission amplifying means is set, and when judging that the total value is greater than the threshold, newly allocates the transmit signal allocated to the transmission amplifying means judged to have the total value greater than the threshold to another transmission amplifying means.

4. The transmission apparatus according to claim 1 or claim 2, wherein said multiplexing allocating control means compares the total value of the transmit power of each of said transmission amplifying means calculated in said transmit power calculating means with a threshold for which each transmission amplifying means is set, and when judging that the total value is greater than the threshold, newly allocates the transmit signal with the greatest transmit power among signals allocated to the transmission amplifying means judged to have the total value greater than the threshold to another transmission amplifying means having the least total value of the transmit power.

5. The transmission apparatus according to either of claims 1 to 4, further comprising:
an optical fiber transmission path through which a multiplexed signal obtained by multiplexing transmit signals allocated by said multiplexing allocating control means is provided to each of said transmission amplifying means.

6. The transmission apparatus according to either of claims 1 to 5, further comprising:
antennas provided for each of said transmission amplifying means.

7. A base station apparatus provided with the transmission apparatus according to either of claims 1 to 6.

8. A transmission method, comprising,
calculating transmit power in variable amplifier for amplifying a transmit signal, based on a transmit power control signal for instructing to increase or decrease the transmit power; and
allocating the transmit signal to each transmission amplifier based on the calculated transmit power.

## Amended claims

### Amended claims under Art. 19.1 PCT

1. (amended) A transmission apparatus comprising:
at least two transmission amplifying means each for amplifying a transmit signal;
transmit power calculating means for calculating transmit power in variable amplifying means for amplifying the transmit signal, based on a transmit power control signal for instructing to increase or decrease the transmit power; and
multiplexing allocating control means for allocating the transmit signal to each of said transmission amplifying means, based on the transmit power calculated in said transmit power calculating means,
wherein said multiplexing allocating control means compares the total value of the transmit power of each of said transmission amplifying means calculated in said transmit power calculating means with a threshold for which each of said transmission amplifying means is set, and when judging that the total value is greater than the threshold, newly allocates the transmit signal allocated to the transmission amplifying means judged to have the total value greater than the threshold to another transmission amplifying means.

2. (amended) A transmission apparatus comprising:
at least two transmission amplifying means each for amplifying a transmit signal;
transmit power calculating means for calculating transmit power in variable amplifying means for amplifying the transmit signal, based on a transmit power control signal for instructing to increase or decrease the transmit power; and
multiplexing allocating control means for allocating the transmit signal to each of said transmission amplifying means, based on the transmit power calculated in said transmit power calculating means,
wherein said multiplexing allocating control means compares the total value of the transmit power of each of said transmission amplifying means calculated in said transmit power calculating means with a threshold for which each of said transmission amplifying means is set, and when judging that the total value is greater than the threshold, newly allocates the transmit signal with the greatest transmit power among signals allocated to the transmission amplifying means judged to have the total value greater than the threshold to another transmission amplifying means having the least total value of the transmit power.

3. (amended) A transmission apparatus comprising:
at least two transmission amplifying means each for amplifying a transmit signal;
transmit power calculating means for calculating transmit power in variable amplifying means for amplifying the transmit signal, based on a transmit power control signal for instructing to increase or decrease the transmit power; and
multiplexing allocating control means for allocating the transmit signal to each of said transmission amplifying means so that total values of the transmit power of said transmission amplifying means to be almost equal to each other, based on the transmit power calculated in said transmit power calculating means,
wherein said multiplexing allocating control means compares the total value of the transmit power of each of said transmission amplifying means calculated in said transmit power calculating means with a threshold for which each of said transmission amplifying means is set, and when judging that the total value is greater than the threshold, newly allocates the transmit signal allocated to the transmission amplifying means judged to have the total greater than the threshold to another transmission amplifying means.

4. (amended) A transmission apparatus comprising:
at least two transmission amplifying means each for amplifying a transmit signal;
transmit power calculating means for calculating transmit power in variable amplifying means for amplifying the transmit signal, based on a transmit power control signal for instructing to increase or decrease the transmit power; and
multiplexing allocating control means for allocating the transmit signal to each of said transmission amplifying means so that total values of the transmit power of said transmission amplifying means to be almost equal to each other, based on the transmit power calculated in said transmit power calculating means,
wherein said multiplexing allocating control means compares the total value of the transmit power of each of said transmission amplifying means calculated in said transmit power calculating means with a threshold for which each of said transmission amplifying means is set, and when judging that the total value is greater than the threshold, newly allocates the transmit signal with the greatest transmit power among signals allocated to the transmission amplifying means judged to have the total value greater than the threshold to another transmission amplifying means having the least total value of the transmit power.

5. The transmission apparatus according to either of claims 1 to 4, further comprising:
an optical fiber transmission path through which a multiplexed signal obtained by multiplexing transmit signals allocated by said multiplexing allocating control means is provided to each of said transmission amplifying means.

6. The transmission apparatus according to either of claims 1 to 5, further comprising:
antennas provided for each of said transmission amplifying means.

7. A base station apparatus provided with the transmission apparatus according to either of claims 1 to 6.

8. A transmission method, comprising,
calculating transmit power in variable amplifier for amplifying a transmit signal, based on a transmit power control signal for instructing to increase or decrease the transmit power; and
allocating the transmit signal to each transmission amplifier based on the calculated transmit power.
